**Europäisches Patentamt**

**European Patent Office**

**Office européen des brevets**

(11) Veröffentlichungsnummer: **0 433 889 B1**

## EUROPÄISCHE PATENTSCHRIFT

(45) Veröffentlichungstag der Patentschrift: **27.04.94**

(21) Anmeldenummer: **90124074.7**

(22) Anmeldetag: **13.12.90**

(51) Int. Cl.5: **C08G 18/48**, C08G 18/72, C08J 9/00, //C08G18:48

(54) **Verfahren zur Herstellung von Polyurethan-Weichschaumstoffen mit geringer Stauchhärte und hierfür verwendbare Blockpolyoxypropylen-polyoxyethylen-polyolgemische.**

(30) Priorität: **21.12.89 DE 3942329**

(43) Veröffentlichungstag der Anmeldung:
**26.06.91 Patentblatt 91/26**

(45) Bekanntmachung des Hinweises auf die Patenterteilung:
**27.04.94 Patentblatt 94/17**

(84) Benannte Vertragsstaaten:
**AT BE CH DE DK ES FR GB IT LI NL SE**

(56) Entgegenhaltungen:
EP-A- 0 116 309          EP-A- 0 173 043
EP-A- 0 218 881          EP-A- 0 379 008
DE-A- 2 549 449          FR-A- 2 231 705
FR-A- 2 268 036

(73) Patentinhaber: **BASF Aktiengesellschaft**
**Carl-Bosch-Strasse 38**
**D-67063 Ludwigshafen(DE)**

(72) Erfinder: **Lutter, Heinz-Dieter, Dr.**
**Helen-Keller-Weg 39**
**W-6903 Neckargemuend(DE)**
Erfinder: **Hinz, Werner, Dr.**
**Hanns-Fay-Strasse 1**
**W-6710 Frankenthal(DE)**
Erfinder: **Decker, Walter**
**Koenigsbacher Strasse 72**
**W-6700 Ludwigshafen(DE)**
Erfinder: **Leppkes Reinhard, Dr.**
**Eschkopfstrasse 2**
**W-6712 Bobenheim-Roxheim(DE)**
Erfinder: **Reich, Erhard, Dr.**
**Heinrich-Strasse 11**
**W-2845 Damme(DE)**
Erfinder: **Peters, Reinhard, Dr.**
**Am Stadtpark 30a**
**W-8000 München(DE)**
Erfinder: **Haase, Volker**
**Tulpenweg 9**
**W-8891 Adelzhausen(DE)**
Erfinder: **Lugmayr, Michael**
**John-F.-Kennedy-Strasse 18/B**
**W-8038 Groebenzell(DE)**

## Beschreibung

Gegenstände der Erfindung sind ein Verfahren zur Herstellung von Polyurethan-Weichschaumstoffen mit geringer Stauchhärte und relativ guter Zugfestigkeit durch Umsetzung von

a) speziellen Blockpolyoxypropylen-polyoxyethylen-polyolgemischen mit einer Hydroxylzahl von 14 bis 65 und einem Gehalt an endständig gebundenen Ethylenoxideinheiten von 2 bis 9 Gew.-%, die ihrerseits erhalten werden unter Verwendung einer Startermolekülmischung mit einer durchschnittlichen Funktionalität von 2,3 bis 2,8, bestehend aus Wasser und Glycerin oder Trimethylolpropan oder aus Wasser, Glycerin und Trimethylolpropan und

b) gegebenenfalls niedermolekularen Kettenverlängerungsmitteln mit

c) organischen und/oder modifizierten organischen Polyisocyanaten

in Gegenwart von

Katalysatoren (d), Treibmitteln (e), Hilfsmitteln und/oder Zusatzstoffen (f)

sowie hierfür verwendbare Blockpolyoxypropylen-polyoxyethylen-polyolgemische.

Die Herstellung von Polyurethan - im folgenden abgekürzt PU genannt - Weichschaumstoffen durch Umsetzung von höhermolekularen Polyhydroxylverbindungen und gegebenenfalls Kettenverlängerungsmitteln mit organischen Polyisocyanaten ist bekannt und wird in zahlreichen Patent- und Literatur-publikationen beschrieben.

Beispielhaft genannt seien das Kunststoff-Handbuch, Band VII, Polyurethane, Carl Hanser Verlag, München, 1. Auflage, 1966, herausgegeben von Dr. R. Vieweg und Dr. A. Höchtlen, und 2. Auflage, 1983, herausgegeben von Dr. G. Oertel sowie die Monographie "Integralschaumstoffe" von Dr. H. Piechota und Dr. H. Röhr, 1975, herausgegeben vom gleichen Verlag.

Zur Herstellung der PU-Weichschaumstoffe werden üblicherweise verwendet: als höhermolekulare Polyhydroxylverbindungen Polyester-polyole und/oder Polyoxyalkylen-polyole auf der Grundlage von 1,2-Propylenoxid, Ethylenoxid oder Gemischen davon sowie Mischungen aus derartigen Polyoxyalkylen-polyolen und Pfropf-polyoxyalkylen-polyolen, als Kettenverlängerungsmittel Alkandiole, Oxalkylenglykole oder hydroxyl- und/oder aminogruppenhaltige, niedermolekulare Verbindungen mit einer Funktionalität von 2 bis 4, wie z. B. Glycerin, Trimethylolpropan oder Alkanolamine, und als organische Polyisocyanate handelsübliche Toluylen-diisocyanate (TDI), Diphenylmethan-diisocyanat-Isomere (MDI), Mischungen aus Diphenylmethan-diisocyanaten und Polyphenyl-polymethylen-polyisocyanaten (Roh-MDI) und Mischungen aus Roh-MDI und TDI.

Durch geeignete Wahl der Aufbaukomponenten und ihrer Mengenverhältnisse können PU-Weichschaumstoffe mit sehr guten mechanischen Eigenschaften, insbesondere mit einer hohen Reißfestigkeit und hoher Stauchhärte, erhalten werden.

Nach Angaben der DE-C-1520737 (US-A-3 336 242) können PU-Schaumstoffe mit offener Zellstruktur hergestellt werden nach einem einstufigen Verfahren durch Umsetzung von Polyisocyanaten mit Polyoxypropylen-polyoxyethylentriolen mit Molekulargewichten von 3000 bis 8000, die als Endblock 3 bis 5 Gew.-% Ethylenoxid und als Startermolekül Glycerin gebunden enthalten.

Sehr weiche PU-Schaumstoffe erhält man nach GB-A-1 079 105 aus einem Polyether-polyol oder einer -mischung mit einer Hydroxylzahl von 70 bis 170, die enthält ein trifunktionelles Polyoxyalkylen-polyol, wie z. B. oxpropyliertes Glycerin und bis zu 40 Gew.-% eines Polyoxyalkylenglykols, z. B. oxpropyliertes Ethylenglykol, und einem organischen Polyisocyanat, bevorzugt TDI, in Gegenwart von Wasser und einem Fluorchlorkohlenwasserstoff, vorzugsweise Trichlorfluormethan, als Treibmittel.

Flexible PU-Schaumstoffe werden ferner in der GB-A-1 064 576 beschrieben. Nach Angaben dieser patentschrift werden organische Diisocyanate, vorzugsweise TDI, mit einer Mischung aus 50 bis 90 Gew.-% eines Polyoxyalkylen-triols mit einer Hydroxylzahl von 30 bis 170 und 10 bis 50 Gew.-% eines Polyoxyalkylen-diols mit einer Hydroxylzahl von 40 bis 110, wobei die Mischung einen Gehalt an primären Hydroxylgruppen von 10 bis 65 % besitzt, in Gegenwart von Wasser zur Reaktion gebracht.

Nach Angaben der FR-A-2 268 036 werden PU-Weichschaumstoffe mit verbesserten Elastizitätseigenschaften hergestellt in Abwesenheit von Silikon-Schaumstabilisatoren durch Umsetzung von organischen Polyisocyanaten mit einer Mischung aus Polyetherolen, die besteht aus

(a) mindestens einem Polyether-polyol mit einer Funktionalität von 2 bis 4, einem Äquivalentgewicht zwischen 1000 und 3000 und gegebenenfalls einem Ethylenoxidgehalt von bis 30 Gew.-% und

(b) 0,5 bis 20 Gew.-%, bezogen auf (a), mindestens eines Polyoxypropylen-polyoxyethylenalkohols mit einer Funktionalität von 1 bis 4, einem Äquivalentgewicht von 500 bis 5000 und einem Ethylenoxidgehalt von 30 bis 95 Gew.-%

in Gegenwart von Katalysatoren und Treibmitteln.

Aus der FR-U-2 231 705 (DE-A-24 25 657) bekannt ist ein Verfahren zur Herstellung von flexiblen PU-Schaumstoffen, bei dem neben einem Treibmittel und einem Polyoxyalkylen-polyol als erfindungswesentliche Aufbaukomponente eine Diphenylmethan-diisocyanatzusammensetzung eingesetzt wird, die eine durchschnittliche Isocyanatfunktionalität von weniger als 2,4 aufweist und nicht mehr als 60 Gew.-% 4,4'-MDI und mindestens 15 Gew.-% 2,4'-MDI enthält. Als Polyoxyalkylen-polyole werden bevorzugt Polyoxypropylen-polyoxyethylen-polyole mit einer statistischen oder blockweisen Bindung der Oxyalkylengruppen verwendet, wobei zu ihrer Herstellung als Startermoleküle insbesondere Gemische aus einem Diol und einem Triol, z.B. Diethylenglycol-Glyceringemische, eingesetzt werden. In dem französischen Patent nicht beschrieben werden Polyoxypropylen-polyoxyethylen-polyole auf der Grundlage einer Mischung aus Wasser und Glycerin und/oder Trimethylolpropan mit einer durchschnittlichen Funktionalität von 2,3 bis 2,8 und einem Gehalt an endständig gebundenen Ethylenoxideinheiten von 2 bis 9 Gew.-%, bezogen auf das Gewicht der Polyoxypropyleneinheiten.

Die beschriebenen Produkte besitzen gute mechanische Eigenschaften, insbesondere eine hohe Stauchhärte und Sag-Faktor.

Die Aufgabe der vorliegenden Erfindung bestand darin, einen PU-Weichschaumstoff mit geringer Stauchhärte herzustellen. Hierbei sollte auf die Verwendung von Fluorchlorkohlenwasserstoffen, die in Verdacht stehen, die Ozonschicht zu schädigen, als Treibmittel vollständig oder zumindest weitgehend verzichtet werden, ohne jedoch die anderen mechanischen Eigenschaften der erhaltenen Schaumstoffe, insbesondere die Zugfestigkeit nachteilig zu beeinflussen.

Als organische Polyisocyanate sollten bevorzugt die schwerflüchtigen gegebenenfalls modifizierten MDI-Isomeren oder Roh-MDI Anwendung finden.

Diese Aufgabe konnte überraschenderweise durch den Einsatz neuer Blockpolyoxypropylen-polyoxyethylen-polyolgemische oder Mischungen dieser Blockpolyoxypropylen-polyoxyethylen-polyolgemische mit di- und/oder trifunktionellen Polyoxypropylen-polyoxyethylen-polyolen zur Herstellung der PU-Weichschaumstoffe gelöst werden.

Gegenstand der Erfindung ist somit ein Verfahren zur Herstellung von Polyurethan-Weichschaumstoffen durch Umsetzung von

a) mindestens difunktionellen Polyoxyalkylen-polyolen und gegebenenfalls
b) polyfunktionellen Kettenverlängerungsmitteln mit Molekulargewichten von 18 bis 400, mit
c) organischen Polyisocyanaten und/oder modifizierten organischen Polyisocyanaten, ausgewählt aus der Gruppe der Ester-, Harnstoff-, Biuret-, Allophanat-, Isocyanurat-, Carbodiimid-, Uretonimin- und/oder Urethangruppen enthaltenden Di- und/oder Polyisocyanate,

in Gegenwart von

d) Katalysatoren,
e) Treibmitteln, ausgewählt aus der Gruppe Wasser, der organischen Carbonsäuren und gegenüber Polyisocyanaten inerten Flüssigkeiten mit Siedepunkten unter 100 °C,

sowie gegebenenfalls

f) Hilfsmitteln und/oder Zusatzstoffen,

das dadurch gekennzeichnet ist, daß man als Polyoxyalkylen-polyole (a) ein Blockpolyoxypropylen-polyoxyethylen-polyolgemisch mit einer Hydroxylzahl von 14 bis 65 und einem Gehalt an endständig gebundenen Ethylenoxideinheiten von 2 bis 9 Gew.-%, bezogen auf das Gewicht der Polyoxypropyleneinheiten, verwendet, das hergestellt wurde durch anionische Polymerisation bei erhöhten Temperaturen von 1,2-Propylenoxid an eine Startermolekülmischung mit einer durchschnittlichen Funktionalität von 2,3 bis 2,8 aus Wasser und Glycerin und/oder Trimethylolpropan und Polymerisation von Ethylenoxid an das erhaltene Polyoxypropylenaddukt.

Ein weiterer Gegenstand der Erfindung ist ein zweistufiges verfahren zur Herstellung von Polyurethan-Weichschaumstoffen, das dadurch gekennzeichnet ist, daß man

1. in der ersten Reaktionsstufe an eine Startermolekülmischung mit einer durchschnittlichen Funktionalität von 2,3 bis 2,8 aus Wasser und Glycerin und/oder Trimethylolpropan in Gegenwart mindestens eines basischen Katalysators bei erhöhter Temperatur 1,2-Propylenoxid und an das erhaltene Polyoxypropylenaddukt Ethylenoxid in einer solchen Menge polymerisiert, daß das erhaltene Blockpolyoxypropylen-polyoxyethylen-polyolgemisch eine Hydroxylzahl von 14 bis 65 und einen Gehalt an endständig gebundenen Ethylenoxideinheiten von 2 bis 9 Gew.-%, bezogen auf das Gewicht der Polyoxypropyleneinheiten, besitzt und

2. in einer zweiten Reaktionsstufe

a) das erhaltene Blockpolyoxypropylen-polyoxyethylen-polyolgemisch und gegebenenfalls
b) polyfunktionelle Kettenverlängerungsmittel mit Molekulargewichten von 18 bis 400, mit

EP 0 433 889 B1

c) organischen Polyisocyanaten und/oder modifizierten organischen Polyisocyanaten, ausgewählt aus der Gruppe der Ester-, Harnstoff-, Biuret-, Allophanat-, Isocyanurat-, Carbodiimid-, Uretonimin- und/oder Urethangruppen enthaltenden Di- und/oder Polyisocyanate

in Gegenwart von

d) Katalysatoren,

e) Treibmitteln, ausgewählt aus der Gruppe Wasser, der organischen Carbonsäuren und gegenüber Polyisocyanaten inerten Flüssigkeiten mit Siedepunkten unter 100°C, sowie gegebenenfalls

f) Hilfsmitteln und/oder Zusatzstoffen

zur Reaktion bringt.

Zweckmäßige und daher bevorzugt angewandte Ausgestaltungen des erfindungsgemäßen Verfahrens sind Gegenstände der Ansprüche 3 bis 7.

Andere Gegenstände der Erfindung sind ferner Blockpolyoxypropylen-polyoxyethylen-polyolgemische mit einer Hydroxylzahl von 14 bis 65 und einem Gehalt an endständig gebundenen Ethylenoxideinheiten von 2 bis 9 Gew.-%, bezogen auf das Gewicht der Polyoxypropyleneinheiten, die hergestellt werden durch anionische Polymerisation bei erhöhten Temperaturen von 1,2-Propylenoxid an eine Startermolekülmischung mit einer durchschnittlichen Funktionalität von 2,3 bis 2,8 aus Wasser und Glycerin und/oder Trimethylolpropan und Polymerisation von Ethylenoxid an das erhaltene Polyoxypropylenaddukt gemäß Anspruch 8 und neue Polyoxyalkylen-polyol-Mischungen, enthaltend oder vorzugsweise bestehend, bezogen auf das Gesamtgewicht, aus

ai) 10 bis 60 Gew.-% eines Blockpolyoxypropylen-polyoxyethylen-polyol-gemisches, gekennzeichnet durch die in Anspruch 8 genannten Merkmale, und

aii) 40 bis 90 Gew.-% mindestens eines di- und/oder trifunktionellen Polyoxypropylen-polyoxyethylen-polyols mit einer Hydroxylzahl von 20 bis 70.

Da durch die Verwendung von Wasser bei der Umsetzung mit den organischen Polyisocyanaten zur Bildung von Kohlendioxid als Treibmittel Harnstoffgruppen gebildet werden, die die Stauchhärte des hergestellten Urethangruppen enthaltenden Schaumstoffs erhöhen, war überraschend und nicht vorhersehbar, daß durch die Verwendung der neuen Blockpolyoxypropylen-polyoxyethylen-polyolgemische dieses Verhalten nicht nur kompensiert wird, sondern vielmehr PU-Weichschaumstoffe mit geringer Stauchhärte erhalten werden, die sich durch gute mechanische Eigenschaften hinsichtlich der Zugfestigkeit, Dehnung, Weiterreißfestigkeit und des Druckverformungsrest auszeichnen.

Zur Herstellung der neuen, erfindungsgemäß verwendbaren Blockpolyoxypropylen-polyoxyethylen-polyolgemische und zu den für das erfindungsgemäße Verfahren verwendbaren anderen Ausgangskomponenten ist im einzelnen folgendes auszuführen:

a) Die neuen Blockpolyoxypropylen-polyoxyethylen-polyolgemische besitzen, wie bereits ausgeführt wurde, eine Hydroxylzahl von 14 bis 65, vorzugsweise von 14 bis 40 und insbesondere von 20 bis 35 und einen Gehalt an endständig gebundenen Ethylenoxideinheiten von 2 bis 9 Gew.-%, vorzugsweise 3 bis 8 Gew.-% und insbesondere von 5 bis 7 Gew.-%, bezogen auf das Gewicht der Polyoxypropyleneinheiten. Eine Erhöhung der Hydroxylzahl über 65 führt ebenso wie eine Erhöhung des Ethylenoxidgehalts im Endblock auf Werte größer als 10 Gew.-% zu einer zunehmenden Verhärtung der PU-Weichschaumstoffe, verbunden mit einer Erhöhung der Stauchhärte. Wird hingegen der Gehalt an Ethylenoxid auf kleiner als 2 Gew.-% vermindert oder werden Polyoxypropylen-polyole verwendet, so wird die Reaktivität der Polyoxyalkylen-polyole stark reduziert und gleichzeitig ihre Empfindlichkeit deutlich erhöht, so daß die hieraus hergestellten PU-Weichschaumsysteme nur in engen Reaktionsbereichen verhältnismäßig problemlos verarbeitet werden können.

Für die Herstellung der neuen Blockpolyoxypropylen-polyoxyethylen-polyole ist ferner die Art der Startermoleküle und die durchschnittliche Funktionalität der Startermolekülmischung von Bedeutung, diese liegt im Bereich von 2,3 bis 2,8, vorzugsweise von 2,3 bis 2,7 und insbesondere von 2,5 bis 2,7. Als Startermoleküle Verwendung finden Mischungen aus Wasser und Trimethylolpropan oder Glycerin, aus Wasser, Trimethylolpropan und Glycerin und vorzugsweise aus Wasser und Glycerin. Zweckmäßigerweise wird das Wasser und Glycerin und/oder Trimethylolpropan in Molverhältnissen von 2,3 : 1 bis 1 : 4, vorzugsweise von 2 : 1 bis 1 : 2,5 und insbesondere von 1 : 1 bis 1 : 2,5 verwendet. Verwendet man anstelle der erfindungsgemäß geeigneten Startermolekülmischung dreiwertige Alkohole als Starter, so erhält man PU-Weichschaumstoffe mit erhöhter Stauchhärte; bei Einsatz von difunktionellen Startern erhält man ebenfalls PU-Weichschaumstoffe mit niedriger Stauchhärte, jedoch auch mit einer unzureichenden Zugfestigkeit.

Die neuen Blockpolyoxypropylen-polyoxyethylen-polyolgemische werden zweckmäßigerweise durch anionische Polymerisation von 1,2-Propylenoxid an die Startermolekülmischung und anschließende Polymerisation von Ethylenoxid an das erhaltene Polyoxypropylenaddukt in Gegenwart von basischen

4

Katalysatoren bei erhöhten Temperaturen und Atmosphärendruck oder erhöhtem Druck hergestellt. Als geeignete Katalysatoren seien Alkalihydroxide, wie z. B. Natrium- oder vorzugsweise Kaliumhydroxid, und Alkalialkoholate, wie Natriummethylat, Natrium- oder Kaliumethylat oder Kaliumisopropylat, beispielhaft genannt. Zur Herstellung der Blockpolyoxypropylen-polyoxyethylen-polyolgemische werden zunächst das Glycerin und/oder Trimethylolpropan in die entsprechenden Alkoholate übergeführt. Je nach Art des verwendeten Katalysators wird das dabei gebildete Wasser teilweise oder der gebildete niedrig siedende Alkohol vollständig abdestilliert. Nach einer bevorzugt angewandten Ausführungsform wird zunächst das Trimethylolpropan und/oder vorzugsweise das Glycerin in das Alkoholat übergeführt unter vollständiger Abtrennung des gebildeten Wasser oder niedrigsiedenden Alkohols. Danach wird eine wäßrige Alkalihydroxidlösung in der erforderlichen Menge zur Einstellung der erfindungsgemäß erforderlichen Funktionalität der Startermolekülmischung dem gebildeten Alkoholat einverleibt. Bei einer Temperatur von 90 bis 150°C, vorzugsweise 100 bis 130°C wird nun das 1,2-Propylenoxid in dem Maße wie es abreagiert bei Normaldruck oder unter erhöhtem Druck bei 1,1 bis 20 bar, vorzugsweise 1,1 bis 7 bar eingetragen. Nach beendeter Propoxylierung kann unmittelbar mit Ethylenoxid der endständige Ethylenoxidblock anpolymerisiert werden. Nach dem vorzugsweise angewandten Herstellungsverfahren wird jedoch nach beendeter Propoxylierung das nicht umgesetzte 1,2-Propylenoxid unter vermindertem Druck vollständig abdestilliert und danach unter den obengenannten Reaktionsbedingungen ethoxiliert. Je nach den gewählten Temperatur- und Druckbedingungen sind für die Propoxilierungs- und Ethoxilierungsreaktion Reaktionszeiten von 4 bis 30 Stunden, vorzugsweise 6 bis 10 Stunden erforderlich. Nach beendeter Ethoxylierung wird gegebenenfalls überschüssiges, nicht abreagiertes Ethylenoxid bei einer Temperatur von 100 bis 150°C unter vermindertem Druck abgetrennt.

Die neuen alkalihaltigen Blockpolyoxypropylen-polyoxyethylen-polyolgemische können z. B. durch Zugabe von anorganischen Säuren, wie z. B. Schwefel-, Phosphor- oder Kohlensäure, organischen Säuren, wie z. B. Zitronensäure, Essigsäure, Ameisensäure u.a. oder Ionenaustauscherharzen neutralisiert und gegebenenfalls durch Zugabe von Adsorptionsmittel nach bekannten Methoden gereinigt werden.

Die erhaltenen Produkte können direkt oder nach einer Zwischenlagerung zur Herstellung der PU-Weichschaumstoffe mit geringer Stauchhärte Verwendung finden.

Anstelle der neuen, erfindungsgemäß verwendbaren Blockpolyoxypropylen-polyoxyethylen-polyolgemische (ai) können zur stufenweisen Erniedrigung der Stauchhärte auch Mischungen aus diesen Blockpolyolen (ai) und konventionellen Polyoxyalkylen-polyolen (aii) zur Herstellung der PU-Weichschaumstoffe nach dem erfindungsgemäßen Verfahren eingesetzt werden. Aus verarbeitungstechnischen Gründen finden zweckmäßigerweise als Polyoxyalkylen-polyole (a) Mischungen Anwendung, die enthalten oder vorzugsweise bestehen, bezogen auf das Gesamtgewicht von (a), aus

(ai) 10 bis 60 Gew.-%, vorzugsweise 20 bis 50 Gew.-% eines Blockpolyoxypropylen-polyoxyethylen-polyolgemisches mit einer Hydroxylzahl von vorzugsweise 14 bis 40, insbesondere von 20 bis 35 und einem Gehalt an endständig gebundenen Ethylenoxideinheiten von vorzugsweise 3 bis 8 Gew.-%, insbesondere von 5 bis 7 Gew.-%, bezogen auf das Gewicht der Polyoxypropyleneinheiten, wobei die durchschnittliche Funktionalität der Startermolekülmischung, bestehend aus Wasser und Glycerin und/oder Trimethylolpropan vorzugsweise 2,3 bis 2,7 und insbesondere 2,5 bis 2,7 beträgt und

(aii) 40 bis 90 Gew.-%, vorzugsweise 50 bis 80 Gew.-% mindestens eines di- und/oder trifunktionellen Polyoxypropylen-polyoxyethylen-polyols mit einer Hydroxylzahl von 20 bis 70, vorzugsweise von 30 bis 56.

Der Einsatz derartiger Mischungen aus (ai) und (aii) führt zu einem akzeptablen Ausgleich zwischen einer sehr guten Verarbeitbarkeit der Formulierungen und guten mechanischen Eigenschaften der erhaltenen PU-Weichschaumstoffe, ohne jedoch die niedrigen Stauchhärten, wie sie bei alleiniger Verwendung von (ai) erzielt werden, zu erreichen.

Hierfür geeignete Polyoxypropylen-polyoxyethylen-polyole (aii) können nach bekannten Verfahren, beispielsweise nach der oben beschriebenen anionischen Polymerisation in Gegenwart von basischen Katalysatoren und unter Verwendung von di- und/oder trifunktionellen Startermolekülen oder durch kationische Polymerisation mit Lewis-Säuren, wie Antimonpentachlorid, Bortrifluorid-Etherat u.a. oder Bleicherde als Katalysatoren aus 1,2-Propylenoxid und Ethylenoxid hergestellt werden.

Als Startermoleküle kommen beispielsweise in Betracht: Wasser, organische Dicarbonsäuren, wie z. B. Bernstein-, Glutar-, Adipin-, Phthal- und Terephthalsäure, Alkanolamine, wie z. B. Ethanolamin, Dialkanolamine, wie z. B. Diethanolamin, Diisopropanolamin, N-Alkyl-dialkanolamine, wie z. B. N-Methyl- und N-Ethyl-diethanolamin, Trialkanolamin, wie Triethanolamin und Triisopropanolamin und Ammoniak. Vorzugsweise verwendet werden zwei- und dreiwertige Alkohole, Dialkylenglykole und Mischungen davon, wie z. B. Ethandiol, Propandiol-1,2 oder -1,3, Diethylen-, Dipropylenglykol, Butandiol-1,4, Hexandiol-1,6, Glycerin und Trimethylolpropan.

Die Polyoxypropylen-polyoxyethylen-polyole (aii) können einzeln oder in Form von Mischungen verwendet werden, wobei die mittelständigen Alkylenoxideinheiten entweder in statistischer Verteilung oder blockweise angeordnet sein können. Insbesondere eingesetzt werden jedoch Polyoxypropylen-polyoxyethylen-polyole mit 3 bis 20 Gew.-%, vorzugsweise 5 bis 18 Gew.-% Ethylenoxid, bezogen auf das Gesamtgewicht der Alkylenoxide, im Endblock, die einen Gehalt an primären Hydroxylgruppen von über 50 %, vorzugsweise über 60 % besitzen. Polyoxyalkylen-polyole der genannten Art werden z. B. beschrieben in der DE-C-1 520 737 (US-A-3 336 242) und DE-A-1 570 885 (GB-A-1 120 223).

b) Gegebenenfalls kann es zur Modifikation der mechanischen Eigenschaften der PU-Weichschaumstoffe mit geringerer Stauchhärte zweckmäßig sein, neben den erfindungsgemäß verwendbaren Blockpolyoxypropylen-polyoxyethylen-polyolen (ai) oder vorzugsweise Mischungen aus (ai) und di- und/oder trifunktionellen Polyoxypropylen-polyoxyethylen-polyolen (aii) zu ihrer Herstellung zusätzlich niedermolekulare Kettenverlängerungsmittel (b) mitzuverwenden.

Als derartige Mittel kommen polyfunktionelle, insbesondere di- und trifunktionelle Verbindungen mit Molekulargewichten von 18 bis 400, vorzugsweise von 62 bis 300 in Betracht. Verwendet werden beispielsweise Di- und/oder Trialkanolamine, wie z. B. Diethanolamin und Triethanolamin, aliphatische Diole und/oder Triole mit 2 bis 6 Kohlenstoffatomen im Alkylenrest, wie z. B. Ethan-, 1,4-Butan-, 1,5-Pentan-, 1,6-Hexandiol, Glycerin und/oder Trimethylolpropan und niedermolekulare Ethoxylierungs- und/oder Propoxylierungsprodukte, hergestellt aus den vorgenannten Di-, Trialkanolaminen, Diolen und/oder Triolen sowie aliphatischen und/oder aromatischen Diaminen wie z. B. 1,2-Ethan-, 1,4-Butan-, 1,6-Hexandiamin, 2,3-, 2,4- und/oder 2,6-Toluylen-diamin, 4,4'-Diamino-diphenylmethan, 3,3'-di- und/oder 3,3',5,5'-tetraalkyl-substituierten 4,4'-Diamino-diphenylmethanen als startermolekülen und Alkylenoxid oder -gemischen.

Als Kettenverlängerungsmittel (b) vorzugsweise eingesetzt werden Dialkanolamine, Diole und/oder Triole und insbesondere Hexandiol-1,6, Diethanolamin, Trimethylolpropan und Glycerin oder Mischungen davon.

Die Kettenverlängerungsmittel (b), die vorzugsweise zur Herstellung der PU-Weichschaumstoffe mitverwendet werden, kommen zweckmäßigerweise in solchen Gewichtsmengen zur Anwendung, daß pro Mol höhermolekularer Verbindung (a) 0,01 bis 8 Mole, insbesondere 0,1 bis 3 Mole Kettenverlängerungsmittel (b) in der Reaktionsmischung vorliegen.

c) Zur Herstellung der PU-Weichschaumstoffe mit geringerer Stauchhärte eignen sich die bekannten organischen, z. B. aliphatischen, cycloaliphatischen, araliphatischen, cycloaliphatisch-aromatischen und vorzugsweise aromatischen Di- und/oder Polyisocyanate. Im einzelnen seien als aromatische Polyisocyanate beispielhaft genannt: Mischungen aus 4,4'- und 2,4'-MDI, Roh-MDI mit einem Gehalt an MDI-Isomeren von zweckmäßigerweise mindestens 35 Gew.-%, vorzugsweise von 50 bis 90 Gew.% und mehr, bezogen auf das Gesamtgewicht der Mischung, 2,4- und 2,6-Toluylen-diisocyanat sowie die entsprechenden handelsüblichen Isomerenmischungen, Mischungen aus Toluylen-diisocyanaten und MDI und/oder Roh-MDI, beispielsweise solchen mit einem MDI-Gehalt von 30 bis 90 Gew.-%, vorzugsweise 40 bis 80 Gew.-%, bezogen auf das Gesamtgewicht des Roh-MDI's.

Geeignet sind auch sogenannte modifizierte mehrwertige Isocyanate, d. h. Produkte, die durch chemische Umsetzung organischer Di- und/oder Polyisocyanate erhalten werden. Beispielhaft genannt seien Ester-, Harnstoff-, Biuret-, Allophanat-, Isocyanurat- und vorzugsweise Carbodiimid-, Uretonimin- und/oder Urethangruppen enthaltende Di- und/oder Polyisocyanate. Im einzelnen kommen beispielsweise in Betracht: Urethangruppen enthaltende Prepolymere mit einem NCO-Gehalt von 14 bis 2,8 Gew.%, vorzugsweise von 12 bis 3,5 Gew.% oder Quasiprepolymere mit einem NCO-Gehalt von 35 bis 14 Gew.%, vorzugsweise von 34 bis 22 Gew.%, wobei mit Urethangruppen modifizierte Polyisocyanate aus Toluylen-diisocyanaten, insbesondere einem NCO-Gehalt von 34 bis 28 Gew.% und solche aus 4,4'-MDI, 4,4'- und 2,4'-MDI-Isomerenmischungen oder Roh-MDI, insbesondere einen NCO-Gehalt von 28 bis 22 Gew.%, bezogen auf das Gesamtgewicht, aufweisen und hergestellt werden durch Umsetzung von Diolen, Oxalkylen-glykolen und/oder Polyoxyalkylenglykolen mit Molekulargewichten von 62 bis 6000, vorzugsweise von 134 bis 4200 mit Toluylen-diisocyanaten, 4,4'-MDI, MDI-Isomerengemischen und/oder Roh-MDI z.B. bei Temperaturen von 20 bis 110 °C, vorzugsweise von 50 bis 90 °C, wobei als Oxalkylen- und Polyoxyalkylen-glykole, die einzeln oder als Gemisch eingesetzt werden können, beispielhaft genannt seien: Diethylen-, Dipropylen-, Polyoxyethylen-, Polyoxypropylen- und Polyoxypropylen-polyoxyethylen-glykole, Carbodiimidgruppen und/oder Isocyanuratgruppen enthaltende Polyisocyanate, z.B. auf MDI-Isomeren- und/oder Toluylen-diisocyanat-Basis.

Besonders bewährt haben sich jedoch und daher vorzugsweise Anwendung finden Mischungen aus 4,4'- und 2,4'-MDI, Roh-MDI mit einem Gehalt an MDI von mindestens 35 Gew.-%, bezogen auf das Gesamtgewicht, Mischungen aus 4,4'- und 2,4'-MDI und Gemischen aus 2,4- und 2,6-TDI, Mischungen aus Roh-MDI und Gemischen aus 2,4- und 2,6-TDI, Urethangruppen enthaltende Polyisocyanatmischungen mit einem NCO-Gehalt von 28 bis 14 Gew.-%, bezogen auf das Gesamtgewicht, auf der Grundlage von MDI und/oder Roh-MDI.

d) Zur Beschleunigung der Umsetzung der Blockpolyoxypropylen-polyoxyethylen-polyolgemische, Polyoxyalkylen-polyolmischungen aus (ai) und (aii) oder vorzugsweise Mischungen aus (ai) oder (ai) und (aii), Wasser als Treibmittel (e) und gegebenenfalls Kettenverlängerungsmittel (b) mit den organischen Polyisocyanaten und/oder modifizierten Polyisocyanaten (c) werden der Reaktionsmischung übliche Polyurethankatalysatoren einverleibt. Vorzugsweise verwendet werden basische Polyurethankatalysatoren, beispielsweise tertiäre Amine, wie Dimethylbenzylamin, Dicyclohexylmethylamin, Dimethylcyclohexylamin, N,N,N'N'-Tetramethyldiamino-diethylether, Bis-(dimethylaminopropyl)harnstoff,N-Methyl- bzw. N-Ethylmorpholin, Dimethylpiperazin, N-Dimethylaminoethylpiperidin, 1,2-Dimethylimidazol, 1-Azabicyclo-(2, 2, 0)-octan, Dimethylaminoethanol, 2-(N,N-Dimethylaminoethoxy)-ethanol, N,N',N''-Tris-(dialkylaminoalkyl)-hexahydrotriazin, z. B. N,N',N''-Tris(dimethylaminopropyl)-s-hexahydrotriazin und insbesondere Triethylendiamin. Geeignet sind jedoch auch Metallsalze, wie Eisen(II)-chlorid, Zinkchlorid, Bleioctoat und vorzugsweise Zinnsalze, wie Zinndioctoat, Zinndiethylhexoat und Dibutylzinndilaurat sowie insbesondere Mischungen aus tertiären Aminen und organischen Zinnsalzen. Eingesetzt werden zweckmäßigerweise 0,1 bis 10 Gew.-%, vorzugsweise 0,3 bis 3 Gew.-% Katalysator auf Basis tertiärer Amine und/oder 0,01 bis 0,5 Gew.-%, vorzugsweise 0,03 bis 0,25 Gew.-% Metallsalze, bezogen auf das Gewicht der Polyoxyalkylenpolyole (a).

e) Zu Treibmitteln (e), welche zur Herstellung der PU-Weichschaumstoffe verwendet werden können, gehört vorzugsweise Wasser, das mit Isocyanatgruppen unter Bildung von Kohlendioxid reagiert. Die Wassermengen, die zweckmäßigerweise eingesetzt werden, betragen 0,1 bis 8 Gew.-Teile, vorzugsweise 1,5 bis 5,0 Gew.-Teile und insbesondere 2,5 bis 3,5 Gew.-Teile, bezogen auf 100 Gew.-Teile der Polyoxyalkylen-polyole (a).

Im Gemisch mit Wasser können auch physikalisch wirkende Treibmittel eingesetzt werden. Geeignet sind Flüssigkeiten, welche gegenüber den organischen, gegebenenfalls modifizierten Polyisocyanaten (c) inert sind und Siedepunkte unter 100 °C, vorzugsweise unter 50 °C, insbesondere zwischen -50 °C und 30 °C bei Atmosphärendruck aufweisen, so daß sie unter dem Einfluß der exothermen Polyadditionsreaktion verdampfen. Beispiele derartiger, vorzugsweise verwendbarer Flüssigkeiten sind Kohlenwasserstoffe, wie n- und iso-Pentan, vorzugsweise technische Gemische aus n- und iso-Pentanen, n- und iso-Butan und Propan, Ether, wie Furan, Dimethylether und Diethylether, Ketone, wie Aceton und Methylethylketon, Carbonsäurealkylester, wie Methylformiat, Dimethyloxalat und Ethylacetat und halogenierte Kohlenwasserstoffe, wie Methylenchlorid, Dichlormonofluormethan, Difluormethan, Trifluormethan, Difluorethan, Tetrafluorethan und Heptafluorpropan. Auch Gemische dieser niedrigsiedenden Flüssigkeiten untereinander und/oder mit anderen substituierten oder unsubstituierten Kohlenwasserstoffen können verwendet werden. Geeignet sind ferner organische Carbonsäuren, wie z. B. Ameisensäure, Essigsäure, Oxalsäure, Ricinolsäure und carboxylgruppenhaltige Verbindungen.

Die neben Wasser erforderliche Menge an physikalisch wirkenden Treibmitteln kann in Abhängigkeit von der gewünschten Schaumstoffdichte auf einfache Weise ermittelt werden und beträgt ungefähr 0 bis 25 Gew.-Teile, vorzugsweise 0 bis 15 Gew.-Teile pro 100 Gew.-Teile der Polyoxyalkylen-polyole (a). Gegebenenfalls kann es zweckmäßig sein, die gegebenenfalls modifizierten Polyisocyanate (c) mit dem inerten physikalisch wirkenden Treibmittel zu mischen und dadurch die Viskosität zu verringern.

f) Der Reaktionsmischung zur Herstellung der PU-Weichschaumstoffe können gegebenenfalls auch noch Hilfsmittel und/oder Zusatzstoffe (f) einverleibt werden. Genannt seien beispielsweise oberflächenaktive Substanzen, Schaumstabilisatoren, Zellregler, Füllstoffe, Farbstoffe, Pigmente, Flammschutzmittel, Hydrolyseschutzmittel, fungistatische und bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten, oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnußöl und Zellregler, wie Paraffine, Fettalkohole und Dimethylpolysiloxane. Zur Verbesserung der Emulgierwirkung, der Zellstruktur und/oder Stabilisierung des Schaumes eignen sich ferner oligomere Polyacrylate mit Polyoxyalkylen- und Fluoralkanresten als Seitengruppen. Die oberflächenaktiven Substanzen werden üblicherweise in Mengen von 0,01 bis 5 Gew.-

Teilen, bezogen auf 100 Gew.-Teile der Polyoxyalkylen-polyole (a), angewandt.

Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im einzelnen seien beispielhaft genannt: anorganische Füllstoffe wie silikatische Mineralien, beispielsweise Schichtsilikate wie Antigorit, Serpentin, Hornblenden, Amphibole, Chrisotil, Zeolithe, Talkum; Metalloxide, wie Kaolin, Aluminiumoxide, Aluminiumsilikat, Titanoxide und Eisenoxide, Metallsalze wie Kreide, Schwerspat und anorganische Pigmente, wie Cadmiumsulfid, Zinksulfid sowie Glaspartikel. Als organische Füllstoffe kommen beispielsweise in Betracht: Ruß, Melamin, Kollophonium, Cyclopentadienylharze und Pfropfpolymerisate.

Die anorganischen und organischen Füllstoffe können einzeln oder als Gemische verwendet werden und werden der Reaktionsmischung vorteilhafterweise in Mengen von 0,5 bis 50 Gew.%, vorzugsweise 1 bis 40 Gew.-%, bezogen auf das Gewicht der Komponenten (a) bis (c), einverleibt.

Geeignete Flammschutzmittel sind beispielsweise Trikresylphosphat, Tris-(2-chlorethyl)phosphat, Tris-(2-chlorpropyl)phosphat, Tris(1,3-dichlorpropyl)phosphat, Tris-(2,3-dibrompropyl)phosphat und Tetrakis-(2-chlorethyl)-ethylendiphosphat.

Außer den bereits genannten halogensubstituierten Phosphaten können auch anorganische Flammschutzmittel, wie roter Phosphor, Aluminiumoxidhydrat, Antimontrioxid, Arsenoxid, Ammoniumpolyphosphat und Calciumsulfat oder Cyanursäurederivate, wie z.B. Melamin oder Mischungen aus mindestens zwei Flammschutzmitteln, wie z.B. Ammoniumpolyphosphaten und Melamin sowie gegebenenfalls Stärke zum Flammfestmachen der erfindungsgemäß hergestellten PU-Weichschaumstoffe verwendet werden. Im allgemeinen hat es sich als zweckmäßig erwiesen, 5 bis 50 Gew.-Teile, vorzugsweise 5 bis 25 Gew.-Teile der genannten Flammschutzmittel oder -mischungen für jeweils 100 Gew.-Teile der Komponenten (a) bis (c) zu verwenden.

Nähere Angaben über die oben genannten anderen üblichen Hilfs- und Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoff-Handbuch, Polyurethane, Band VII, Carl-Hanser-Verlag, München, Wien, 1. und 2. Auflage, 1966 und 1983 zu entnehmen.

Wenn Wasser als Treibmittel eingesetzt wird, werden zur Herstellung der PU-Weichschaumstoffe die organischen, gegebenenfalls modifizierten Polyisocyanate (c), die mindestens difunktionellen Polyoxyalkylen-polyole (a) und gegebenenfalls Kettenverlängerungsmittel (b) in Gegenwart von Katalysatoren (d), Treibmitteln (e), und gegebenenfalls Hilfsmitteln und/oder Zusatzstoffen (f) bei Temperaturen von 0 bis 100°C, vorzugsweise 15 bis 80°C in solchen Mengenverhältnissen zur Reaktion gebracht, daß pro NCO-Gruppe 0,5 bis 2, vorzugsweise 0,8 bis 1,3 und insbesondere ungefähr ein reaktive(s) Wasserstoffatom(e) gebunden an die Ausgangskomponenten (a) und gegebenenfalls (b) vorliegen und das Molverhältnis von Äquivalente Wasser zu Äquivalente NCO-Gruppe 0,5 bis 5 : 1, vorzugsweise 0,7 bis 0,95 : 1 und insbesondere 0,75 bis 0,85 : 1 beträgt.

Die PU-Weichschaumstoffe werden zweckmäßigerweise nach dem one shot-Verfahren durch Vermischen von zwei Komponenten A und B hergestellt, wobei die Ausgangskomponenten (a), (d), (e) und gegebenenfalls (b) und (f) zu der sogenannten A-Komponente vereinigt und als B-Komponente die Ausgangskomponente (c) gegebenenfalls im Gemisch mit (f) und inerten, physikalisch wirkenden Treibmitteln verwendet werden. Da die A-Komponente mindestens 6 Monate lagerstabil ist, müssen die A- und B-Komponente vor Herstellung der PU-Weichschaumstoffe nur noch intensiv gemischt werden. Die Reaktionsmischung kann in offenen oder geschlossenen Formwerkzeugen verschäumt werden; sie eignet sich ferner zur Herstellung von Blockschaumstoffen.

Das erfindungsgemäße Verfahren eignet sich auch zur Herstellung von PU-Weichformschaumstoffen. Die Reaktionsmischung wird hierzu mit einer Temperatur von 15 bis 80°C, vorzugsweise 30 bis 65°C in ein zweckmäßigerweise metallisches temperierbares Formwerkzeug eingebracht. Die Formwerkzeugtemperatur beträgt üblicherweise 20 bis 90°C, vorzugsweise 35 bis 70°C. Die Reaktionsmischung läßt man unter Verdichtung z. B. bei Verdichtungsgraden von 1,1 bis 8, vorzugsweise von 2 bis 6 und insbesondere 2,2 bis 4 in dem geschlossenen Formwerkzeug aushärten.

Die nach dem erfindungsgemäßen Verfahren hergestellten PU-Weichschaumstoffe besitzen i.d.R. Dichten von 10 bis 150 g/Liter, vorzugsweise 20 bis 70 g/Liter und zeichnen sich durch eine geringe Stauchhärte bei einem guten Niveau der anderen mechanischen Eigenschaften, insbesondere der Zugfestigkeit aus. Als zusätzlicher Vorteil ist die hohe mechanische Beständigkeit bei einer Beanspruchung unter erhöhter Temperatur und hoher Luftfeuchtigkeit zu nennen.

Die neuen Blockpolyoxypropylen-polyoxyethylen-polyolgemische (ai) und Polyoxyalkylen-polyol-Mischungen aus (ai) und mindestens einem di- und/oder trifunktionellen Polyoxypropylen-polyoxyethylen-polyol (aii) eignen sich zur Herstellung von PU-Weichschaumstoffen mit geringer Stauchhärte. Die nach dem erfindungsgemäßen Verfahren hergestellten PU-Weichschaumstoffe finden Verwendung als Sitzpolster in der Kraftfahrzeug- und Möbelindustrie und die PU-Formweichschaumstoffe als Polsterelemente z. B. als Sitzpolster, Armlehnen, Kopfstützen, Sonnenblenden und Sicherheitsabdeckungen in Fahrzeugkabinen, vorzugsweise in Kraftfahrzeugen und Flugzeugen.

Beispiele

Herstellung der Blockpolyoxypropylen-polyoxyethylen-polyolgemische (ai)

Beispiel 1

2,2 Gew.-Teile Glycerin wurden in einem Reaktor vorgelegt und mit 1,9 Gew.-Teilen einer 47 gew.-%igen wäßrigen Kaliumhydroxidlösung gemischt. Diese Mischung wurde zur Entfernung des eingebrachten und bei der Alkoholatbildung entstehenden Wassers unter vermindertem Druck (0,1 - 0,01 bar) bei einer Temperatur von 80°C solange entwässert (ungefähr 1 Stunde) bis das Molverhältnis der Mischung von Glycerin in Glycerolatform zu Wasser 1 : 2 betrug (durchschnittliche Funktionalität der Startermolekülmischung 2,33). Anschließend wurden 188 Gew.-Teile 1,2-Propylenoxid bei einer Temperatur von 110°C und einem maximalen Druck von 4,5 bar über einen Zeitraum von ungefähr 8 Stunden zugeführt. Nach Beendigung der 1,2-Propylenoxidzugabe und einer Nachreaktionszeit von ungefähr 3 Stunden, wurde das Reaktionsgemisch zur Entfernung des nicht umgesetzten 1,2-Propylenoxids, bei 110°C und 0,01 bar gestrippt.

12 Gew.-Teile Ethylenoxid wurden danach bei 115°C und einem maximalen Druck von 5 bar über einen Zeitraum von 2 Stunden zudosiert. Nach Abreaktion des Ethylenoxid wurde die Reaktionsmischung zur Entfernung des nicht umgesetzten Ethylenoxids unter den vorgenannten Reaktionsbedingungen erneut gestrippt, mit Phosphorsäure anschließend neutralisiert und nach bekannten Methoden gereinigt.

Man erhielt ein Blockpolyoxypropylen-polyoxyethylen-polyolgemisch mit einer Hydroxylzahl von 30 und einem Gehalt an endständigen Ethylenoxidgruppen von 6 Gew.-%, bezogen auf das Gewicht der polymerisierten 1,2-Propylenoxideinheiten.

Beispiel 2

Man verfuhr analog den Angaben des Beispiels 1, destillierte jedoch das mit der Kaliumhydroxidlösung eingebrachte und bei der Alkoholatbildung gebildete Wasser in einer solchen Menge ab, daß die Reaktionsmischung Glycerin in Glycerolatform und Wasser im Molverhältnis 2 : 1 enthielt (durchschnittliche Funktionalität der Startermolekülmischung 2,66).

Man erhielt ein Blockpolyoxypropylen-polyoxyethylen-Polyolgemisch mit einer Hydroxylzahl von 30 und einem Gehalt von 6 Gew.-%, bezogen auf das Gewicht der polymerisierten 1,2-Propylenoxideinheiten, an endständigen Ethylenoxideinheiten.

Herstellung von PU-Weichschaumstoffen

Beispiel 3

A-Komponente: Mischung, bestehend aus
95,66 Gew.-Teilen des Blockpolyoxypropylen-polyoxyethylen-polyolgemisches, hergestellt nach Beispiel 1,
3,24 Gew.-Teilen Wasser,
0,46 Gew.-Teilen einer 33 gew.-%igen Lösung von Triethylendiamin in Dipropylenglykol,
0,12 Gew.-Teilen Bis(N,N-dimethylaminoethyl)ether,
0,46 Gew.-Teilen 2-(Dimethylaminoethoxy)ethanol und
0,06 Gew.-Teilen eines Stabilisators auf Silikonbasis (Tegostab® B 4690 der Goldschmidt AG, Essen)
B-Komponente: Roh-MDI mit einem NCO-Gehalt von 31,3 Gew.-%, das bezogen auf das Gesamtgewicht enthielt: 37 Gew.-% 4,4'-MDI und 2 Gew.-% 2,4'-MDI.
100 Gew.-Teile der A-Komponente und
55 Gew.-Teile der B-Komponente wurden, entsprechend einem NCO-Index von
100, bei 23°C 8 Sekunden lang intensiv gemischt.

720 g der Reaktionsmischung wurden in ein auf 50°C temperiertes, metallisches Formwerkzeug mit den inneren Abmessungen 40 x 40 x 10 cm eingefüllt, das Formwerkzeug geschlossen und die Reaktionsmischung aufschäumen gelassen.

Nach einer Formstandzeit von 3 Minuten wurde der elastische PU-Weichschaumstoff-Formkörper entformt. Er besaß nach DIN 53 420 eine Dichte von 45 g/Liter.

Beispiel 4

Man verfuhr analog den Angaben des Beispiels 3, verwendet jedoch anstelle des Blockpolyoxypropylen-polyoxyethylen-polyolgemisches nach Beispiel 1 ein solches hergestellt nach den Angaben des Beispiels 2.

Vergleichsbeispiele I bis VI

PU-Weichschaumstoffe wurden analog den Angaben des Beispiels 3 hergestellt, wobei jedoch anstelle der neuen Blockpolyoxypropylen-polyoxyethylen-polyolgemische (ai) die folgenden Polyoxyalkylen-polyole in einer Menge von 95,66 Gew.-Teilen in der A-Komponente eingesetzt wurden.

Vergleichsbeispiel I:

Mit Glycerin gestartetes Polyoxypropylen-polyoxyethylen-polyol mit einer Hydroxylzahl von 35 und 13 Gew.-% endständigen Polyoxyethylengruppen, bezogen auf das Gesamtgewicht der Alkylenoxideinheiten.

Vergleichsbeispiel II

Ein mit Glycerin und Wasser im Molverhältnis 2 : 1 (durchschnittliche Funktionalität der Startermolekülmischung 2,66) gestartetes Polyoxypropylen-polyol mit der Hydroxylzahl von 30. Die gebildete Schaumstruktur kollabierte.

Vergleichsbeispiel III

Ein mit Glycerin und Wasser im Molverhältnis 2 : 1 gestartetes Polyoxypropylen-polyoxyethylen-polyol mit einer Hydroxylzahl von 30 und 20 Gew.-% endständigen Polyoxyethylengruppen, bezogen auf das Gesamtgewicht der Alkylenoxideinheiten.

Vergleichsbeispiel IV

Ein mit Glycerin gestartetes Polyoxypropylen-polyoxyethylen-polyol mit einer Hydroxylzahl von 30 und mit 5 Gew.-% endständigen Polyoxyethylengruppen, bezogen auf das Gesamtgewicht der Alkylenoxideinheiten.

Vergleichsbeispiel V

Ein mit Glycerin und Wasser im Molverhältnis 2 : 1 gestartetes Polyoxypropylen-polyoxyethylen-polyol mit einer Hydroxylzahl von 30 und mit 13 Gew.-% endständigen Polyoxyethylengruppen, bezogen auf das Gesamtgewicht der Alkylenoxideinheiten.

Vergleichsbeispiel VI

Ein mit 1,3-Propandiol gestartetes Polyoxypropylen-polyoxyethylen-glykol mit einer Hydroxylzahl von 30 und 5 Gew.-% endständigen Polyoxyethylengruppen, bezogen auf das Gesamtgewicht der Alkylenoxideinheiten.

Die an den PU-Weichschaumstoffen, hergestellt nach den Beispielen 3 und 4 und den Vergleichsbeispielen I bis VI, gemessenen mechanischen Eigenschaften sind in der folgenden Tabelle zusammmgefaßt.

Tabelle : Mechanische Eigenschaften der PU-Weichschaumstoffe nach den Beispielen 3 und 4 und Vergleichsbeispielen I bis VI

| | Beispiele | | Vergleichsbeispiele | | | | | |
|---|---|---|---|---|---|---|---|---|
| | 1 | 2 | I | II | III | IV | V | VI |
| Zugfestigkeit nach DIN 53 571 [kPa] | 50 | 56 | 80 | – | 106 | 58 | 83 | 45 |
| Dehung nach DIN 53 571 [%] | 68 | 54 | 62 | – | 64 | 61 | 64 | 66 |
| Weiterreißfestigkeit nach DIN 53 575 [N/mm] | 0,13 | 0,15 | 0,27 | – | 0,32 | 0,22 | 0,24 | 0,14 |
| Druckverformungsrest nach DIN 53 572 [%] | 5,6 | 4,2 | 4,6 | – | 11,9 | 3,7 | 4,2 | 4,8 |
| Stauchhärte nach DIN 53 577 bei | | | | | | | | |
| 20 % Stauchung [kPa] | 2,6 | 2,4 | 4,7 | – | 4,1 | 4,8 | 4,0 | 1,9 |
| 40 % Stauchung [kPa] | 3,5 | 3,3 | 6,6 | – | 5,7 | 6,6 | 5,6 | 2,5 |
| 60 % Stauchung [kPa] | 5,8 | 5,7 | 11,2 | – | 9,8 | 11,7 | 9,3 | 4,3 |

Beispiel 5

Man verfuhr analog den Angaben des Beispiels 3, verwendete jedoch anstelle des Blockpolyoxypropylen-polyoxyethylen-polyolgemisches

100 Gew.-Teile einer Mischung, die bestand aus

0 bis 100 Gew.-Teilen des Blockpolyoxypropylen-polyoxyethylen-polyolgemisches nach Beispiel 2 (ai2) und 100 bis 0 Gew.-Teilen eines Polyoxypropylen-polyoxyethylen-polyols mit einer Hydroxylzahl von 35 und einem Gehalt an endständigen Ethylenoxideinheiten von 13 Gew.-%, bezogen auf den Gesamtgehalt an

11

Alkylenoxideinheiten, hergestellt unter Verwendung von Glycerin als Startermolekül (aii).

An den hergestellten PU-Weichschaumstoffen wurden in Abhängigkeit von den verwendeten Mengen (ai2) und (aii) die folgenden Stauchhärten bei 40 % Stauchung, gemessen nach DIN 53 577, ermittelt:

| ai2 [Gew.-Teile] | 0 | 10 | 20 | 30 | 40 | 50 | 60 | 70 | 80 | 90 | 100 |
|---|---|---|---|---|---|---|---|---|---|---|---|
| aii [Gew.-Teile] | 100 | 90 | 80 | 70 | 60 | 50 | 40 | 30 | 20 | 10 | 0 |
| Stauchhärte 40 % [kPa] | 6,6* | 6,3 | 5,8 | 5,4 | 5,3 | 5,2 | 4,8 | 4,6 | 3,8 | 3,5 | 3,3 |

* Vergleichsprodukt

**Patentansprüche**

1. Verfahren zur Herstellung von Polyurethan-Weichschaumstoffen durch Umsetzung von
    a) mindestens difunktionellen Polyoxyalkylen-polyolen und gegebenenfalls
    b) polyfunktionellen Kettenverlängerungsmitteln mit Molekulargewichten von 18 bis 400, mit
    c) organischen Polyisocyanaten und/oder modifizierten organischen Polyisocyanaten, ausgewählt aus der Gruppe der Ester-, Harnstoff-, Biuret-, Allophanat-, Isocyanurat-, Carbodiimid-, Uretonimin- und/oder Urethangruppen enthaltenden Di- und/oder Polyisocyanate,
in Gegenwart von
    d) Katalysatoren,
    e) Treibmitteln, ausgewählt aus der Gruppe Wasser, der organischen Carbonsäuren und gegenüber Polyisocyanaten inerten Flüssigkeiten mit Siedepunkten unter 100 °C, sowie gegebenenfalls
    f) Hilfsmitteln und/oder Zusatzstoffen
dadurch gekennzeichnet, daß man als Polyoxyalkylen-polyole (a) ein Blockpolyoxypropylen-polyoxyethylen-polyolgemische mit einer Hydroxylzahl von 14 bis 65 und einem Gehalt an endständig gebundenen Ethylenoxideinheiten von 2 bis 9 Gew.-%, bezogen auf das Gewicht der Polyoxypropyleneinheiten, verwendet, das hergestellt wurde durch anionische Polymerisation bei erhöhten Temperaturen von 1,2-Propylenoxid an eine Startermolekülmischung mit einer durchschnittlichen Funktionalität von 2,3 bis 2,8 aus Wasser und Glycerin und/oder Trimethylolpropan und Polymerisation von Ethylenoxid an das erhaltene Polyoxypropylenaddukt.

2. Zweistufiges Verfahren zur Herstellung von Polyurethan-Weichschaum-stoffen, dadurch gekennzeichnet, daß man
    1. in der ersten Reaktionsstufe an eine Startermolekülmischung mit einer durchschnittlichen Funktionalität von 2,3 bis 2,8 aus Wasser und Glycerin und/oder Trimethylolpropan in Gegenwart mindestens eines basischen Katalysators bei erhöhter Temperatur 1,2-Propylenoxid und an das erhaltene Polyoxypropylenaddukt Ethylenoxid in einer solchen Menge polymerisiert, daß das erhaltene Blockpolyoxypropylen-polyoxyethylen-polyolgemisch eine Hydroxylzahl von 14 bis 65 und einen Gehalt an endständig gebundenen Ethylenoxideinheiten von 2 bis 9 Gew.-%, bezogen auf das Gewicht der Polyoxypropyleneinheiten, besitzt und
    2. in einer zweiten Reaktionsstufe
        a) das erhaltene Blockpolyoxypropylen-polyoxyethylen-polyolgemisch und gegebenenfalls
        b) polyfunktionelle Kettenverlängerungsmittel mit Molekulargewichten von 18 bis 400 mit
        c) organischen Polyisocyanaten und/oder modifizierten organischen Polyisocyanaten, ausgewählt aus der Gruppe der Ester-, Harnstoff-, Biuret-, Allophanat-, Isocyanurat-, Carbodiimid-, Uretonimin- und/oder Urethangruppen enthaltenden Di- und/oder Polyisocyanate
    in Gegenwart von
        d) Katalysatoren,
        e) Treibmitteln, ausgewählt aus der Gruppe Wasser, der organischen Carbonsäuren und gegenüber Polyisocyanaten inerten Flüssigkeiten mit Siedepunkten unter 100 °C, sowie gegebenenfalls
        f) Hilfsmitteln und/oder Zusatzstoffen
    zur Reaktion bringt.

3. Verfahren nach einem der Ansprüche 1 oder 2, dadurch gekennzeichnet, daß das Blockpolyoxypropylen-polyoxyethylen-polyolgemische eine Hydroxylzahl von 14 bis 40 und einen Gehalt an endständig gebundenen Ethylenoxideinheiten von 3 bis 8 Gew.-%, bezogen auf das Gewicht der Polyoxypropyleneinheiten, besitzt.

**4.** Verfahren nach einem der Ansprüche 1 bis 3, dadurch gekennzeichnet, daß die Startermolekülmischung zur Herstellung des Blockpolyoxypropylen-polyoxyethylen-polyolgemisches besteht aus einer Wasser-Glycerin- und/oder Wasser-Trimethylolpropan-Mischung im Molverhältnis 2,3 : 1 bis 1 : 4.

**5.** Verfahren nach Anspruch 1, dadurch gekennzeichnet, daß man als mindestens difunktionelle Polyoxyalkylen-polyole (a) eine Mischung verwendet, die enthält, bezogen auf das Gesamtgewicht von (a),

ai) 10 bis 60 Gew.-% eines Blockpolyoxypropylen-polyoxyethylen-polyolgemisches mit einer Hydroxylzahl von 14 bis 40 und einem Gehalt an endständig gebundenen Ethylenoxideinheiten von 3 bis 8 Gew.-%, bezogen auf das Gewicht der Polyoxypropyleneinheiten, das hergestellt wurde durch anionische Polymerisation bei erhöhten Temperaturen von 1,2-Propylenoxid an eine Startermolekülmischung mit einer durchschnittlichen Funktionalität von 2,3 bis 2,7 aus Wasser und Glycerin und/oder Trimethylolpropan und Polymerisation von Ethylenoxid an das erhaltene Polyoxypropylenaddukt und

aii) 40 bis 90 Gew.-% mindestens eines di- und/oder trifunktionellen Polyoxypropylen-polyoxyethylen-polyols mit einer Hydroxylzahl von 20 bis 70,

wobei Mischungen mit einem Gehalt an Oxethyleneinheiten von 60 bis 85 Gew.-%, bezogen auf das Gesamtgewicht an polymerisierten Alkylenoxideinheiten, in (aii) ausgenommen sind.

**6.** Verfahren nach einem der Ansprüche 1 bis 5, dadurch gekennzeichnet, daß man als organische und/oder modifizierte organische Polyisocyanate (c) verwendet:

Mischungen aus 4,4'- und 2,4'-Diphenylmethan-diisocyanat, Mischungen aus Diphenylmethan-diisocyanaten und Polyphenyl-polymethylen-polyisocyanaten mit einem Gehalt an Diphenylmethan-diisocyanaten von mindestens 35 Gew.-%, bezogen auf das Gesamtgewicht, Mischungen aus 4,4'- und 2,4'-Diphenylmethan-diisocyanat und Gemischen aus 2,4- und 2,6-Toluylen-diisocyanat, Mischungen aus Diphenylmethan-diisocyanaten und Polyphenyl-polymethylen-polyisocyanaten und Gemischen aus 2,4- und 2,6-Toluylen-diisocyanaten, Urethangruppen enthaltende Polyisocyanatmischungen mit einem NCO-Gehalt von 28 bis 14 Gew.-%, bezogen auf das Gesamtgewicht, auf der Grundlage von Diphenylmethan-diisocyanaten oder Mischungen aus Diphenylmethan-diisocyanaten und Polyphenyl-polymethylen-polyisocyanaten.

**7.** Verfahren nach einem der Ansprüche 1 bis 6, dadurch gekennzeichnet, daß man als Treibmittel (e) Wasser in einer Menge von 0,1 bis 8 Gew-Teilen, bezogen auf 100 Gew.-Teile der Polyoxyalkylenpolyole (a) verwendet.

**8.** Blockpolyoxypropylen-polyoxyethylen-polyolgemische mit einer Hydroxylzahl von 14 bis 65 und einem Gehalt an endständig gebundenen Ethylenoxideinheiten von 2 bis 9 Gew.-%, bezogen auf das Gewicht der Polyoxypropyleneinheiten, die hergestellt werden durch anionische Polymerisation bei erhöhten Temperaturen von 1,2-Propylenoxid an eine Startermolekülmischung mit einer durchschnittlichen Funktionalität von 2,3 bis 2,8 aus Wasser und Glycerin und/oder Trimethylolpropan und Polymerisation von Ethylenoxid an das erhaltene Polyoxypropylenaddukt.

**9.** Polyoxyalkylen-polyol-Mischungen, enthaltend, bezogen auf das Gesamtgewicht,

ai) 10 bis 60 Gew.-% eines Blockpolyoxypropylen-polyoxyethylen-polyolgemisches nach Anspruch 9 und

aii) 40 bis 90 Gew.-% mindestens eines di- und/oder trifunktionellen Polyoxypropylen-polyoxyethylen-polyols mit einer Hydroxylzahl von 20 bis 70,

wobei Polyoxyalkylen-polyol-Mischungen mit 10 bis 40 Gew.-% (ai) und 60 bis 90 Gew.-% (aii) ausgenommen sind.

## Claims

**1.** A process for the preparation of a flexible polyurethane foam by reacting

a) bifunctional or polyfunctional polyoxyalkylenepolyols and, if required,

b) polyfunctional chain extenders having molecular weights of from 18 to 400, with

c) organic polyisocyanates and/or modified organic polyisocyanates selected from the group consisting of di- and/or polyisocyanates containing ester, urea, biuret, allophanate, isocyanurate, carbodiimide, uretonimine and/or urethane groups,

in the presence of

d) catalysts,

e) blowing agents selected from the group consisting of water, organic carboxylic acids and liquids which are inert toward polyisocyanates and have boiling points below 100°C,

and, if required,

f) assistants and/or additives,

wherein the polyoxyalkylenepolyols (a) used are a block polyoxypropylenepolyoxyethylenepolyol mixture which has a hydroxyl number of from 14 to 65, contains from 2 to 9% by weight, based on the weight of the polyoxypropylene units, of ethylene oxide units bonded in the terminal position, and was prepared by anionic polymerization, at elevated temperatures, of 1,2-propylene oxide with an initiator mixture having an average functionality of from 2.3 to 2.8 and consisting of water and glycerol and/or trimethylolpropane, and polymerization of ethylene oxide with the resulting polyoxypropylene adduct.

2. A two-stage process for the preparation of a flexible polyurethane foam, wherein

1. in a first reaction stage, 1,2-propylene oxide is polymerized with an initiator mixture having an average functionality of from 2.3 to 2.8 and consisting of water and glycerol and/or trimethylolpropane, in the presence of at least one basic catalyst, at elevated temperatures, and ethylene oxide is polymerized with the resulting polyoxypropylene adduct, in an amount such that the resulting block polyoxypropylenepolyoxyethylenepolyol mixture has a hydroxyl number of from 14 to 65 and contains from 2 to 9% by weight, based on the weight of the polyoxypropylene units, of ethylene oxide units bonded in the terminal position, and

2. in a second reaction stage,

a) the resulting block polyoxypropylenepolyoxyethylenepolyol mixture and, if required,

b) polyfunctional chain extenders having molecular weights of from 18 to 400 are reacted with

c) organic polyisocyanates and/or modified organic polyisocyanates selected from the group consisting of di- and/or polyisocyanates containing ester, urea, biuret, allophanate, isocyanurate, carbodiimide, uretonimine and/or urethane groups,

in the presence of

d) catalysts,

e) blowing agents selected from the group consisting of water, organic carboxylic acids and liquids which are inert toward polyisocyanates and have boiling points below 100°C,

and, if required,

f) assistants and/or additives.

3. A process as claimed in claim 1 or 2, wherein the block polyoxypropylenepolyoxyethylenepolyol mixture has a hydroxyl number of from 14 to 40 and contains from 3 to 8% by weight, based on the weight of the polyoxypropylene units, of ethylene oxide units bonded in the terminal position.

4. A process as claimed in claim 1 or 2 or 3, wherein the initiator mixture for the preparation of the block polyoxypropylenepolyoxyethylenepolyol mixture consists of a mixture of water and glycerol and/or water and trimethylolpropane in a molar ratio of from 2.3 : 1 to 1 : 4.

5. A process as claimed in claim 1, wherein the bifunctional or polyfunctional polyoxyalkylenepolyols (a) used are a mixture which contains, based on the total weight of (a),

ai) from 10 to 60% by weight of a block polyoxypropylenepolyoxyethylenepolyol mixture which has a hydroxyl number of from 14 to 40, contains from 3 to 8% by weight, based on the weight of the polyoxypropylene units, of ethylene oxide units bonded in the terminal position and was prepared by anionic polymerization, at elevated temperatures, of 1,2-propylene oxide with an initiator mixture having an average functionality of from 2.3 to 2.7 and consisting of water and glycerol and trimethylolpropane or of water and glycerol or trimethylolpropane, and polymerization of ethylene oxide with the resulting polyoxypropylene adduct, and

aii) from 40 to 90% by weight of at least one bi- and/or trifunctional polyoxypropylenepolyoxyethylenepolyol having a hydroxyl number of from 20 to 70, with the exception of mixtures containing from 60 to 85% by weight, based on the total weight of polymerized alkylene oxide units, of oxyethylene units in (aii).

6. A process as claimed in claim 1 or 2 or 3 or 4 or 5, wherein the organic or modified organic polyisocyanates or organic and modified organic polyisocyanates (c) used are:

mixtures of diphenylmethane 4,4'- and 2,4'-diisocyanate, mixtures of diphenylmethane diisocyanates and polyphenylenepolymethylene polyisocyanates containing not less than 35% by weight, based on the total weight, of diphenylmethane diisocyanates, mixtures of diphenylmethane 4,4'- and 2,4'- diisocyanate and mixtures of toluylene 2,4- and 2,6-diisocyanate, mixtures of diphenylmethane diisocyanates and polyphenylpolymethylene polyisocyanates and mixtures of toluylene 2,4- and 2,6- diisocyanates, urethane-containing polyisocyanate mixtures having an NCO content of from 28 to 14% by weight, based on the total weight, and derived from diphenylmethane diisocyanates, or mixtures of diphenylmethane diisocyanates and polyphenylpolymethylene polyisocyanates.

7.  A process as claimed in claim 1 or 2 or 3 or 4 or 5 or 6, wherein water is used as the blowing agent (e), in an amount of from 0.1 to 8 parts by weight per 100 parts by weight of the polyoxyalkylenepolyols (a).

8.  A block polyoxypropylenepolyoxyethylenepolyol mixture which has a hydroxyl number of from 14 to 65, contains from 2 to 9% by weight, based on the weight of the polyoxypropylene units, of ethylene oxide units bonded in the terminal position and is prepared by anionic polymerization, at elevated temperatures, of 1,2-propylene oxide with an initiator mixture having an average functionality of from 2.3 to 2.8 and consisting of water and glycerol and trimethylolpropane or of water and glycerol or trimethylolpropane, and polymerization of ethylene oxide with the resulting polyoxypropylene adduct.

9.  A polyoxyalkylenepolyol mixture containing
    ai) from 10 to 60% by weight of a block polyoxypropylenepolyoxyethylenepolyol mixture as claimed in claim 8 and
    aii) from 40 to 90% by weight of at least one bi- and/or trifunctional polyoxypropylenepolyoxyethylenepolyol having a hydroxyl number of from 20 to 70,
    with the exception of polyoxyalkylenepolyol mixtures containing from 10 to 40% by weight of (ai) and 60 to 90% by weight of (aii), the percentages being based on the total weight.

**Revendications**

1.  Procédé pour la préparation de matières alvéolaires souples de polyuréthannes par réaction de
    a) des polyoxyalkylène-polyols au moins difonctionnels et le cas échéant
    b) des agents d'allongement des chaînes polyfonctionnels, de poids moléculaire 18 à 400, avec
    c) des polyisocyanates organiques et/ou des polyisocyanates organiques modifiés choisis dans le groupe des di- et/ou polyisocyanates des groupes ester, urée, biuret, allophanate, isocyanurate, carbodiimide, urétonimine et/ou uréthanne,
    en présence de
    d) catalyseurs,
    e) gonflants choisis dans le groupe formé par l'eau, les acides carboxyliques organiques et les liquides inertes à l'égard des polyisocyanates et ayant des points d'ébullition inférieurs à 100°C,
    et le cas échéant
    f) produits auxiliaires et/ou additifs,
    caractérisé par le fait que l'on utilise en tant que polyoxyalkylène-polyols (a) un mélange de polyoxypropylène-polyoxyéthylène-polyols séquencés d'indice d'hydroxyle 14 à 65 et contenant de 2 à 9 % en poids de motifs d'oxyde d'éthylène fixés dans les positions terminales, par rapport au poids des motifs de polyoxypropylène, qui a été préparé par polymérisation anionique à chaud de l'oxyde de 1,2-propylène sur un mélange de molécules de départ ayant une fonctionnalité moyenne de 2,3 à 2,8 et consistant en eau et glycérol et/ou triméthylolpropane, et polymérisation de l'oxyde d'éthylène sur l'adduct polyoxypropylène ainsi obtenu.

2.  Procédé en deux stades opératoires pour la préparation de matières alvéolaires souples de polyuréthannes, caractérisé en ce que
    1. au premier stade de réaction, sur un mélange de molécules de départ ayant une fonctionnalité moyenne de 2,3 à 2,8 et consistant en eau et glycérol et/ou triméthylolpropane, en présence d'au moins un catalyseur basique, on polymérise à chaud l'oxyde de 1,2-propyle et sur l'adduct polyoxypropylène ainsi obtenu, l'oxyde d'éthylène, en quantités telles que le mélange de polyoxypropylène-polyoxyéthylène-polyols séquencé ainsi obtenu ait un indice d'hydroxyle de 14 à 65 et une teneur en motifs d'oxyde d'éthylène fixés dans les positions terminales de 2 à 9 % en poids, par rapport au poids des motifs de polyoxypropylène, et

2. dans un deuxième stade opératoire, on fait réagir

a) le mélange de polyoxypropylène-polyoxyéthylène-polyols séquencés ainsi obtenu et le cas échéant

b) des agents d'allongement des chaînes polyfonctionnels de poids moléculaire 18 à 400 avec

c) des polyisocyanates organiques et/ou des polyisocyanates organiques modifiés choisis parmi les di- et/ou polyisocyanates contenant des groupes ester, urée, biuret, allophanate, isocyanurate, carbodiimide, urétonimine et/ou uréthanne

en présence de

d) catalyseurs,

e) gonflants choisis dans le groupe formé par l'eau, les acides organiques carboxyliques et les liquides inertes à l'égard des polyisocyanates et ayant des points d'ébullition inférieurs à 100° C,

f) produits auxiliaires et/ou additifs.

3. Procédé selon l'une des revendications 1 ou 2, caractérisé en ce que le mélange de polyoxypropylène-polyoxyéthylène-polyols séquencés a un indice d'hydroxyle de 14 à 40 et une teneur en motifs d'oxyde d'éthylène fixés dans les positions terminales de 3 à 8 % en poids par rapport au poids des motifs de polyoxypropylène.

4. Procédé selon une des revendications 1 à 3, caractérisé en ce que le mélange de molécules de départ servant à la préparation du mélange de polyoxypropylène-polyoxyéthylène-polyols séquencés consiste en un mélange eau-glycérol- et/ou eau-triméthylolpropane à un rapport molaire de 2,3 : 1 à 1 : 4.

5. Procédé selon la revendication 1, caractérisé en ce que l'on utilise en tant que polyoxyalkylène-polyols au moins difonctionnels (a) un mélange qui contient, sur son poids total,

ai) 10 à 60 % en poids du mélange de polyoxypropylène-polyoxyéthylène-polyols séquencés d'indice d'hydroxyle 14 à 400 et à une teneur en motifs d'oxyde d'éthylène fixés dans les positions terminales de 3 à 8 % en poids par rapport au poids des motifs de polyoxypropylène, qui a été préparé par polymérisation anionique à chaud de l'oxyde de 1,2-propylène sur un mélange de molécules de départ de fonctionnalité moyenne 2,3 à 2,7 consistant en eau et glycérol et/ou triméthylolpropane, et polymérisation de l'oxyde d'éthylène sur l'adduct polyoxypropylène ainsi obtenu, et

aii) 40 à 90 % en poids d'au moins un polyoxypropylène-polyoxyéthylène-polyoldi- et/ou trifonctionnel d'indice d'hydroxyde 20 à 70,

sous réserve que, dans aii) les mélanges contenant des motifs oxyéthylène en proportions de 60 à 80 % en poids, par rapport au poids total des motifs d'oxydes d'alkylène polymérisés, sont exclus.

6. Procédé selon l'une des revendications 1 à 5, caractérisé en ce que l'on utilise en tant que polyisocyanates organiques et/ou polyisocyanates organiques modifiés (c) :

des mélanges de 4,4'- et de 2,4'-diphénylméthane-diisocyanates, des mélanges de diphénylméthane-diisocyanates et de polyphénylpolyméthylène-polyisocyanates d'une teneur en diphénylméthane-diisocyanates d'au moins 35 % en poids, par rapport au poids total, des mélanges de 4,4'- et 2,4'diphénylméthane-diisocyanates et des mélanges de 2,4- et 2,6-toluylène-diisocyanates, des mélanges de diphénylméthane-diisocyanates et de polyphényl-polyméthylène-polyisocyanates et des mélanges de 2,4- et de 2,6-toluylène-diisocyanates, des mélanges de polyisocyanates contenant des groupes uréthanne d'une teneur en NCO de 28 à 14 % en poids, par rapport au poids total, à base de diphénylméthane-diisocyanates ou de mélanges de diphénylméthane-diisocyanates et de polyphénylpolyméthylène-polyisocyanates.

7. Procédé selon l'une des revendications 1 à 6, caractérisé en ce que l'on utilise en tant que gonflant (e) l'eau en quantité de 0,1 à 8 parties en poids pour 100 parties en poids de polyoxyalkylène-polyols (a).

8. Mélanges de polyoxypropylène-polyoxyéthylène-polyols séquencés ayant un indice d'hydroxyle de 14 à 65 et une teneur en motifs d'oxyde d'éthylène fixés dans les positions terminales de 2 à 9 % en poids, par rapport au poids des motifs de polyoxypropylènes, qui ont été préparés par polymérisation anionique à chaud de l'oxyde de 1,2-propylène sur un mélange de molécules de départ ayant une fonctionnalité moyenne de 2,3 à 2,8 et consistant en eau et glycérol et/ou triméthylolpropane, et polymérisation de l'oxyde d'éthylène sur l'adduct polyoxypropylène ainsi obtenu.

9. Mélanges de polyoxyalkylène-polyols contenant, sur le poids total,

ai) 10 à 60 % en poids d'un mélange de polyoxypropylènepolyoxyéthylène-polyolsséquencés selon la revendication 9 et

aii) 40 à 90 % en poids d'au moins un polyoxypropylène-polyoxyéthylène-polyoldi- et/ou tri-fonctionnel d'indice d'hydroxyle 20 à 70,

à l'exclusion des mélanges de polyoxyalkylène-polyols contenant 10 à 40 % en poids de (ai) et 60 à 90 % en poids de (aii).